# EUROPEAN PATENT APPLICATION

(11) **EP 4 755 928 A1**
(43) Date of publication of application: **10.06.2026**
(21) Application number: 24851751.8
(22) Date of filing: 01.08.2024
(51) Int. Cl.: C08C 19/08, C08J 11/10

(54) **LIQUID POLYMER, MIXTURE OF LIQUID POLYMER AND RECYCLED CARBON BLACK, AND METHOD FOR RECOVERING DIENE-BASED MONOMER**

(30) Priority: 04.08.2023 JP 2023128064
(71) Applicant: BRIDGESTONE CORPORATION, Chuo-ku Tokyo 104-8340 (JP); National Institute of Advanced Industrial Science and Technology, Chiyoda-ku Tokyo 100-8921 (JP); Tohoku University, Sendai-shi, Miyagi 980-8577 (JP)
(72) Inventor: HOJO Masahiro, Tokyo 104-8340 (JP); TAHARA Seiichi, Tokyo 104-8340 (JP); HOMMA Masahiro, Tokyo 104-8340 (JP); FUKAYA Norihisa, Tsukuba-shi, Ibaraki 305-8561 (JP); WAHYU Satpriyo Putro, Tsukuba-shi, Ibaraki 305-8561 (JP); UEDA Yoshihiro, Tsukuba-shi, Ibaraki 305-8561 (JP); CHOI Jun-Chul, Tsukuba-shi, Ibaraki 305-8561 (JP); YAMASHITA Hiroshi, Tsukuba-shi, Ibaraki 305-8561 (JP); HATORI Makiko, Tsukuba-shi, Ibaraki 305-8561 (JP); SUGIKI Makoto, Tsukuba-shi, Ibaraki 305-8561 (JP); TANAKA Hisanori, Tsukuba-shi, Ibaraki 305-8561 (JP); KAMEI Naoki, Tsukuba-shi, Ibaraki 305-8561 (JP); YOSHIOKA Toshiaki, Sendai-shi, Miyagi 980-8577 (JP); KUMAGAI Shogo, Sendai-shi, Miyagi 980-8577 (JP)
(74) Representative: Marks & Clerk LLP
(86) International application number: PCT/JP2024/027587
(87) International publication number: WO 2025/033326

(57) **Abstract**

To address a problem of providing a liquid polymer that is obtained by decomposition of crosslinked rubber and enables a diene monomer to be obtained at a high yield, a solution is a liquid polymer obtained by decomposition of crosslinked rubber containing diene rubber, wherein the liquid polymer has a weight-average molecular weight of 500 to 300,000, and relative to mass of a diene monomer skeleton of the diene rubber in the crosslinked rubber before the decomposition, the liquid polymer has a retention rate of the diene monomer skeleton of 30 mass% or more. It is preferable that the diene monomer skeleton of the diene rubber is at least one selected from the group consisting of an isoprene skeleton and a butadiene skeleton.

## Description

### TECHNICAL FIELD

The present disclosure relates to a liquid polymer, a mixture of a liquid polymer and recovered carbon black, and a method for recovering a diene monomer.

### BACKGROUND

Conventionally, rubber products mainly composed of crosslinked rubber such as vulcanized rubber are difficult to reuse, and after the end of their product life, they are often reused as fuel, particularly in cement plants and the like. However, in recent years, with the increasing awareness of environmental issues, there is a demand for the development of methods for reusing materials obtained by decomposing rubber products, rather than incinerating rubber products as fuel.

As methods for decomposing crosslinked rubber, various methods are known. For example, PTL 1 discloses thermally decomposing organic materials such as used tires at 550°C to 800°C, and further discloses compounding carbon black obtained by thermal decomposition as a filler in a rubber composition.

### CITATION LIST

### Patent Literature

PTL 1: EP 3427975 A1

### SUMMARY

### (Technical Problem)

Generally, rubber products made of crosslinked rubber use a rubber composition in which a diene rubber is compounded with a filler such as carbon black. Therefore, by decomposing the crosslinked rubber, carbon black can be recovered as described in PTL 1 above. In addition, the present inventors have found that, by selecting the decomposition conditions of the crosslinked rubber, not only carbon black but also constituent monomers and oligomers (liquid polymers) of the diene rubber can be obtained.

However, the liquid polymers obtained by the present inventors so far have not sufficiently retained the skeleton of the constituent monomers of the diene rubber, and there is a problem in that diene monomers cannot be obtained from the liquid polymer at a sufficient yield.

Accordingly, an object of the present disclosure is to provide a liquid polymer that is obtained by decomposition of crosslinked rubber and enables a diene monomer to be obtained at a high yield.

Further, another object of the present disclosure is to provide a mixture of such a liquid polymer and recovered carbon black, and a method for recovering a diene monomer.

### (Solution to Problem)

The gist configuration of a liquid polymer, a mixture of a liquid polymer and recovered carbon black, and a method for recovering a diene monomer of the present disclosure that solve the above problems is as follows.
[1] A liquid polymer obtained by decomposition of crosslinked rubber containing diene rubber, wherein
   the liquid polymer has a weight-average molecular weight of 500 to 300,000, and
   relative to mass of a diene monomer skeleton of the diene rubber in the crosslinked rubber before the decomposition, the liquid polymer has a retention rate of the diene monomer skeleton of 30 mass% or more.
[2] The liquid polymer according to [1], wherein the diene monomer skeleton of the diene rubber is at least one selected from the group consisting of an isoprene skeleton and a butadiene skeleton.
[3] The liquid polymer according to [1] or [2], wherein
   the crosslinked rubber contains diene rubber including an isoprene skeleton, and
   relative to mass of the isoprene skeleton of the diene rubber in the crosslinked rubber before the decomposition, the liquid polymer has a retention rate of the isoprene skeleton of 30 mass% or more.
[4] The liquid polymer according to any one of [1] to [3], wherein
   the crosslinked rubber contains diene rubber including a butadiene skeleton, and
   relative to mass of the butadiene skeleton of the diene rubber in the crosslinked rubber before the decomposition, the liquid polymer has a retention rate of the butadiene skeleton of 30 mass% or more.
[5] The liquid polymer according to any one of [1] to [4], wherein relative to mass of a diene monomer skeleton of the diene rubber in the crosslinked rubber before the decomposition, the liquid polymer has a retention rate of the diene monomer skeleton of 50 mass% or more.
[6] The liquid polymer according to any one of [1] to [5], wherein relative to mass of a diene monomer skeleton of the diene rubber in the crosslinked rubber before the decomposition, the liquid polymer has a retention rate of the diene monomer skeleton of 70 mass% or more.
[7] The liquid polymer according to any one of [1] to [6], wherein the crosslinked rubber is sulfur crosslinked rubber.
[8] A mixture of a liquid polymer and recovered carbon black obtained by decomposition of crosslinked rubber containing diene rubber and carbon black, wherein the liquid polymer is the liquid polymer according to any one of [1] to [7].
[9] A mixture of a liquid polymer and recovered carbon black obtained by decomposition of crosslinked rubber containing diene rubber and carbon black, wherein the liquid polymer is obtained by removing some or all of components having a molecular weight of 5,000 or less in the liquid polymer according to any one of [1] to [7], and has a proportion of components having a molecular weight of 15,000 or less of 30 mass% or less.
[10] A method for recovering a diene monomer comprising thermally decomposing the liquid polymer according to any one of [1] to [7] at 300°C to 950°C under an inert gas atmosphere and in the presence of a catalyst.
[11] A method for recovering a diene monomer comprising thermally decomposing the liquid polymer according to any one of [1] to [7] at 300°C to 450°C under an inert gas atmosphere and in the absence of a catalyst.
[12] A method for recovering a diene monomer comprising thermally decomposing the liquid polymer according to any one of [1] to [7] at 600°C to 950°C under an inert gas atmosphere and in the absence of a catalyst.

### (Advantageous Effect)

According to the present disclosure, it is possible to provide a liquid polymer that is obtained by decomposition of crosslinked rubber and enables a diene monomer to be obtained at a high yield.

Further, according to the present disclosure, it is possible to provide a mixture of such a liquid polymer and recovered carbon black, and a method for recovering a diene monomer.

### DETAILED DESCRIPTION

Hereinafter, the liquid polymer, the mixture of a liquid polymer and recovered carbon black, and the method for recovering a diene monomer of the present disclosure will be exemplified and described in detail based on embodiments thereof.

### <Definitions>

The compounds described in the present specification may be partially or entirely derived from fossil resources, derived from biological resources such as plant resources, or derived from recycled resources such as used tires. Further, they may be derived from a mixture of any two or more of fossil resources, biological resources, and recycled resources.

### <Liquid Polymer>

The liquid polymer of the present embodiment is a liquid polymer obtained by decomposition of crosslinked rubber containing diene rubber, has a weight-average molecular weight of 500 to 300,000, and, relative to the mass of a diene monomer skeleton of the diene rubber in the crosslinked rubber before the decomposition, has a retention rate of the diene monomer skeleton of 30 mass% or more.

The liquid polymer of the present embodiment has a sufficiently low molecular weight, with a weight-average molecular weight of 500 to 300,000, and since the retention rate of the diene monomer skeleton relative to the mass of the diene monomer skeleton of the diene rubber in the crosslinked rubber before the decomposition is 30 mass% or more, a diene monomer can be obtained at a high yield by further decomposing the liquid polymer.

Here, in the present specification, the term "liquid polymer" refers to a substance that is liquid at room temperature (23°C) and contains two or more diene monomer units.

### (Crosslinked Rubber)

The liquid polymer of the present embodiment is obtained by decomposition of crosslinked rubber, and the crosslinked rubber contains diene rubber and may further contain carbon black or the like.

The crosslinked rubber used for decomposition may be grouped in advance according to the type of diene rubber blended, and the decomposition process may be performed for each group. Alternatively, grouping may be performed in advance according to the type of filler blended (for example, the type of carbon black, the type of silica, the mixing ratio of carbon black and silica, etc.), and the decomposition process may be performed for each group. Furthermore, both grouping by type of diene rubber and grouping by type of filler may be performed, and the decomposition process may be performed for each group. When the decomposition process is performed for each group in this manner, a liquid polymer, recovered carbon black, recovered silica, etc. having more uniform physical properties can be obtained, and when blended again into a rubber composition, a rubber composition with better performance can be obtained.

Further, when the crosslinked rubber used for decomposition is derived from tires, grouping may be performed in advance according to the type of tire (for example, for passenger vehicles, for trucks and buses, for large vehicles such as off-road vehicles, for aircraft, for agricultural vehicles, etc.), and the decomposition process may be performed for each group. Alternatively, grouping may be performed in advance according to the tire component (for example, tread rubber, sidewall rubber, bead portion rubber, steel cord coating rubber, organic fiber coating rubber, pad rubber, cushion rubber, etc.), and the decomposition process may be performed for each group. Furthermore, both grouping by tire type and grouping by tire component may be performed, and the decomposition process may be performed for each group. When the decomposition process is performed for each group in this manner, a liquid polymer or recovered carbon black having more uniform physical properties can be obtained, and when blended again into a rubber composition, a rubber composition with better performance can be obtained.

The form of the crosslinked rubber is not particularly limited, and may be, for example, powdered rubber or the like. Such powdered rubber can be obtained by cutting and pulverizing used rubber products such as waste tires. The pulverization process may include multiple steps such as a preliminary pulverization step and a fine pulverization step, and after the pulverization process, a classification step may be performed to adjust the particle size of the powdered rubber to be used.

The crosslinked rubber may be waste rubber subjected to recycling, used rubber products, or the like. Waste rubber is not limited to that generated from rubber products, but refers to all discarded rubber including unnecessary scraps generated during production or repair of rubber products. Examples of scraps include, for example, buffing powder and peeling rubber. Buffing powder is, for example, fine rubber generated in the buffing process in tire retreading, where the tread portion remaining on the base tire is shaved off. Peeling rubber is, for example, long rubber strips of 1 to 2 cm width peeled from the surface of rubber products such as tires. Peeling rubber is generated by shaving the surface of rubber products such as tires using a knife with a U-shaped or V-shaped tip as a peeler. Rubber products include, for example, final products such as tires, rubber hoses, rubber conveyor belts, and rubber parts or components at the manufacturing stage of final products. Used tires may be those subjected to retreading, or may be waste tires generated by tire replacement, vehicle scrapping, or the like, and may also be ELT (End-of-Life Tire) that have reached the end of their service life as tires, or any tires discarded for any reason.

The crosslinked rubber is preferably sulfur crosslinked rubber. Sulfur crosslinked rubber is easily obtainable, and a liquid polymer derived from sulfur crosslinked rubber can yield a diene monomer at a higher yield by further decomposition.

### - Diene Rubber -

The diene rubber is rubber containing units (diene units) derived from a diene monomer, and may further contain units derived from a copolymerizable comonomer.

The units derived from the diene monomer enable crosslinking (vulcanization) of the diene rubber and impart elongation and strength characteristic of rubber. In the crosslinked rubber, the diene rubber is usually present in a crosslinked state, but a portion may be uncrosslinked. Specific examples of diene monomers (diene compounds) include 1,3-butadiene, isoprene, 1,3-pentadiene, 2,3-dimethyl-1,3-butadiene, and the like. Among these, 1,3-butadiene and isoprene are preferred, and isoprene is particularly preferred.

On the other hand, examples of the copolymerizable comonomer include aromatic vinyl compounds. Specific examples of such aromatic vinyl compounds include styrene, o-methylstyrene, m-methylstyrene, p-methylstyrene, o,p-dimethylstyrene, o-ethylstyrene, m-ethylstyrene, p-ethylstyrene, and the like.

Examples of the diene rubber include isoprene skeleton rubber, styrene-butadiene rubber (SBR), butadiene rubber (BR), chloroprene rubber (CR), and the like. Here, isoprene skeleton rubber refers to rubber having isoprene units as the main skeleton, and specific examples include natural rubber (NR), synthetic isoprene rubber (IR), and the like. Among these, it is preferable that the diene rubber contains at least one selected from the group consisting of isoprene skeleton rubber, styrene-butadiene rubber, and butadiene rubber, and isoprene skeleton rubber is particularly preferred. When the diene rubber contains at least one selected from the group consisting of isoprene skeleton rubber, styrene-butadiene rubber, and butadiene rubber, decomposition of the crosslinked rubber yields a liquid polymer containing an easily reusable diene monomer such as isoprene or butadiene in its skeleton, together with recovered carbon black.

Further, when the crosslinked rubber contains both isoprene skeleton rubber and butadiene rubber as the diene rubber, the proportion of butadiene rubber in the total amount of isoprene skeleton rubber and butadiene rubber is preferably 50 mass% or less. When the proportion of butadiene rubber in the total amount of isoprene skeleton rubber and butadiene rubber is 50 mass% or less, gelation can be suppressed during decomposition, and a decomposition product (liquid polymer) with a high isoprene skeleton retention rate can be obtained.

When the crosslinked rubber contains butadiene rubber as the diene rubber, particularly when the proportion of butadiene rubber in the diene rubber exceeds 50 mass%, it is preferable to use an antioxidizing agent, decomposition accelerator, or the like to prevent re-crosslinking.

The content of the diene rubber in the crosslinked rubber is not particularly limited, and is preferably in the range of 10 to 100 mass%, and more preferably in the range of 30 to 100 mass% from the viewpoint of further improving the yield of a liquid polymer containing a diene monomer in its skeleton and the yield of butadiene and isoprene.

### - Carbon Black -

The crosslinked rubber may further contain carbon black. The carbon black is not particularly limited, and examples of the grade of carbon black include N134, N110, N220, N234, N219, N339, N330, N326, N351, N550, N762, and the like.

The content of carbon black in the crosslinked rubber is not particularly limited, and is, for example, in the range of 10 to 150 parts by mass per 100 parts by mass of the diene rubber, and preferably in the range of 30 to 120 parts by mass.

Further, the content of carbon black in the crosslinked rubber is preferably 20 mass% or more, more preferably 30 mass% or more, and preferably 40 mass% or less, more preferably 35 mass% or less. When the content of carbon black in the crosslinked rubber is 20 mass% or more, the amount of recoverable carbon black increases.

### - Sulfur -

As described above, the crosslinked rubber is preferably sulfur crosslinked rubber, that is, the crosslinked rubber preferably contains sulfur. In the sulfur crosslinked rubber, sulfur is usually present in a state of crosslinking the diene rubber (as a bridge of the diene rubber), but a portion may be free.

The content of sulfur in the crosslinked rubber is not particularly limited, and is, for example, in the range of 0.1 to 10 parts by mass per 100 parts by mass of the diene rubber, and preferably in the range of 1 to 5 parts by mass.

### - Other Components -

The crosslinked rubber may further contain, in addition to the above diene rubber, carbon black, and sulfur, various components commonly used in the rubber industry, for example, rubber components other than diene rubber, fillers other than carbon black (such as silica, calcium carbonate), silane coupling agents, antioxidants, softeners, processing aids, resins, surfactants, organic acids (such as stearic acid), zinc oxide (zinc white), vulcanization accelerators, crosslinking agents other than sulfur (such as peroxides), and the like.

### (Weight-Average Molecular Weight)

The liquid polymer of the present embodiment has a weight-average molecular weight (Mw) of 500 to 300,000, and preferably 1,000 to 250,000. If the weight-average molecular weight (Mw) is less than 500, decomposition has proceeded too far, making it difficult to achieve a retention rate of the diene monomer skeleton of 30 mass% or more. On the other hand, if the weight-average molecular weight (Mw) exceeds 300,000, decomposition has not sufficiently progressed, and when obtaining a diene monomer from the liquid polymer by further decomposition, side reactions are likely to proceed, resulting in a decreased yield of the diene monomer.

In the present specification, the weight-average molecular weight (Mw) is measured by gel permeation chromatography (GPC).

### (Retention Rate of Diene Monomer Skeleton)

The liquid polymer of the present embodiment has a retention rate of the diene monomer skeleton of 30 mass% or more, preferably 50 mass% or more, and more preferably 70 mass% or more, relative to the mass of the diene monomer skeleton of the diene rubber in the crosslinked rubber before the decomposition. When the retention rate of the diene monomer skeleton is 70 mass% or more, a diene monomer can be obtained from the liquid polymer at a high yield by further decomposition.

In the present specification, the retention rate of the diene monomer skeleton (isoprene skeleton, butadiene skeleton, etc.) is measured by ¹H-NMR.

The diene monomer skeleton of the diene rubber is preferably at least one selected from the group consisting of an isoprene skeleton and a butadiene skeleton. From a liquid polymer with a high retention rate of an isoprene skeleton and/or a butadiene skeleton, an easily reusable diene monomer such as isoprene or butadiene can be obtained at a high yield by further decomposition.

When the crosslinked rubber contains diene rubber including an isoprene skeleton, the retention rate of the isoprene skeleton is preferably 30 mass% or more relative to the mass of the isoprene skeleton of the diene rubber in the crosslinked rubber before the decomposition. From a liquid polymer with a high retention rate of the isoprene skeleton, isoprene, which is easily reusable as a monomer, can be obtained at a high yield by further decomposition.

When the crosslinked rubber contains diene rubber including a butadiene skeleton, the retention rate of the butadiene skeleton is preferably 30 mass% or more relative to the mass of the butadiene skeleton of the diene rubber in the crosslinked rubber before the decomposition. From a liquid polymer with a high retention rate of the butadiene skeleton, butadiene, which is easily reusable as a monomer, can be obtained at a high yield by further decomposition.

### (Method for Producing Liquid Polymer)

The method for producing the liquid polymer of the present embodiment is not particularly limited. For example, the liquid polymer can be obtained by decomposition of crosslinked rubber by a method such as:
(i) a method of decomposing crosslinked rubber using a metathesis catalyst (first decomposition method),
(ii) a method of thermally decomposing crosslinked rubber at 150°C to 400°C (second decomposition method),
(iii) a method of decomposing crosslinked rubber in a solvent (third decomposition method), or
(iv) a method of decomposing crosslinked rubber using a radical initiator (fourth decomposition method).

These first, second, third, and fourth decomposition methods are decomposition at lower temperatures compared to conventional high-temperature thermal decomposition of crosslinked rubber, so gasification and aromatization of the decomposition products can be suppressed, and compared to ordinary high-temperature thermal decomposition, a liquid polymer with a higher retention rate of the skeleton of the constituent monomers of the diene rubber (isoprene skeleton, butadiene skeleton, etc.) can be obtained. The first, second, third, and fourth decomposition methods will be described in detail below.

### - First Decomposition Method (Metathesis Decomposition) -

In the first decomposition method, the crosslinked rubber is decomposed using a metathesis catalyst. Here, as the metathesis catalyst, a catalyst represented by the following general formula (1), (2), or (3): 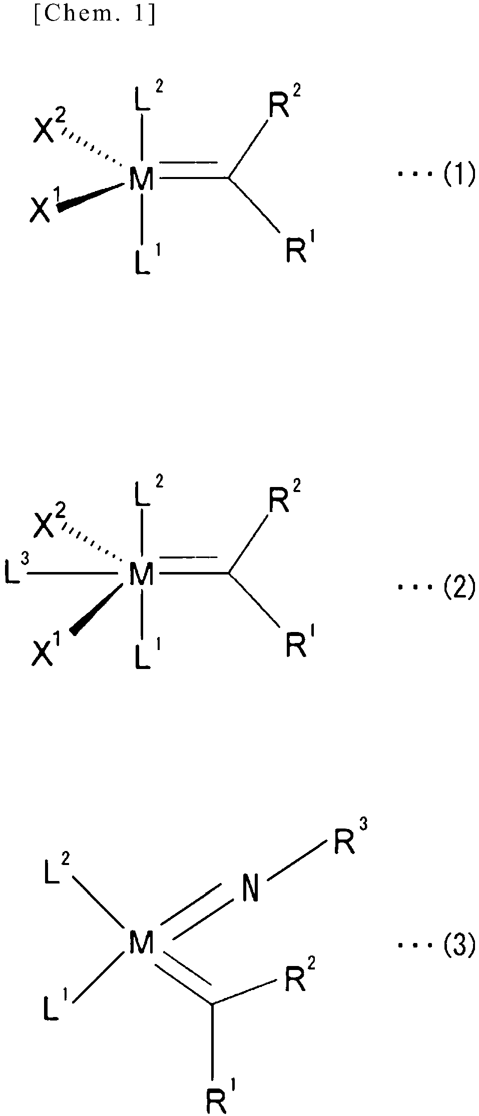 is preferred. The catalyst of general formula (1), (2), or (3) is excellent in promoting metathesis decomposition and can decompose diene rubber simply (under mild conditions) and rapidly.

In the above general formulae (1), (2), and (3), M is ruthenium (Ru), titanium (Ti), molybdenum (Mo), or tungsten (W). Among these, from the viewpoint of promoting the decomposition reaction of diene rubber in the crosslinked rubber, ruthenium is preferred as M.

In the above general formulae (1) and (2), X¹ and X² each independently represent a ligand, preferably an anionic ligand. Examples of X¹ and X² include hydrogen, halogen, pseudohalogen, a straight-chain or branched alkyl group having 1 to 30 carbon atoms, an aryl group having 6 to 24 carbon atoms, an alkoxy group having 1 to 20 carbon atoms, an aryloxy group having 6 to 24 carbon atoms, an alkyl diketone having 3 to 20 carbon atoms, an aryl diketone having 6 to 24 carbon atoms, a carboxylate having 1 to 20 carbon atoms, an alkyl sulfonate having 1 to 20 carbon atoms, an aryl sulfonate having 6 to 24 carbon atoms, an alkyl thiol group having 1 to 20 carbon atoms, an aryl thiol group having 6 to 24 carbon atoms, an alkylsulfonyl group having 1 to 20 carbon atoms, or an alkylsulfinyl group having 1 to 20 carbon atoms.

The above X¹ and X² may be substituted with one or more further groups, for example, halogen (preferably fluorine), an alkyl group having 1 to 10 carbon atoms, an alkoxy group having 1 to 10 carbon atoms, or an aryl group having 6 to 24 carbon atoms, and such groups may further be substituted with one or more substituents selected from the group consisting of halogen (preferably fluorine), an alkyl group having 1 to 5 carbon atoms, an alkoxy group having 1 to 5 carbon atoms, and a phenyl group.

In a preferred embodiment, X¹ and X² are the same or different and are each halogen (particularly fluorine, chlorine, bromine, or iodine), benzoate, carboxylate having 1 to 5 carbon atoms, alkyl group having 1 to 5 carbon atoms, phenoxy group, alkoxy group having 1 to 5 carbon atoms, alkyl thiol group having 1 to 5 carbon atoms, aryl thiol group having 6 to 24 carbon atoms, aryl group having 6 to 24 carbon atoms, or alkyl sulfonate having 1 to 5 carbon atoms.

In a particularly preferred embodiment, X¹ and X² are the same and are each halogen (particularly chlorine), CF₃COO, CH₃COO, CFH₂COO, (CH₃)₃CO, (CF₃)₂(CH₃)CO, (CF₃)(CH₃)₂CO, PhO (phenoxy), MeO (methoxy), EtO (ethoxy), tosylate (p-CH₃-C₆H₄-SO₃), mesylate (2,4,6-trimethylphenyl), or CF₃SO₃ (trifluoromethanesulfonate).

In the above general formulae (1), (2), and (3), L¹, L², and L³ each independently represent a ligand, and are preferably neutral (uncharged) electron donors (also referred to as "electron-donating neutral ligands"). L¹, L², and L³ may each independently be, for example, a phosphine, sulfonated phosphine, phosphate, phosphinic acid ester, phosphonite, arsine, stibine, ether, amine, amide, aryloxy, sulfonate, sulfoxide, carboxyl, nitrosyl, pyridine, thioether, or imidazolidine ligand. L¹, L², and L³ are preferably, each independently, an aryl phosphine ligand having 6 to 24 carbon atoms, an alkyl phosphine ligand having 1 to 10 carbon atoms or a cycloalkyl phosphine ligand having 3 to 20 carbon atoms, a sulfonated aryl phosphine ligand having 6 to 24 carbon atoms or a sulfonated alkyl phosphine ligand having 1 to 10 carbon atoms, an aryl phosphinic acid ester ligand having 6 to 24 carbon atoms or an alkyl phosphinic acid ester ligand having 1 to 10 carbon atoms, an aryl phosphonite ligand having 6 to 24 carbon atoms or an alkyl phosphonite ligand having 1 to 10 carbon atoms, an aryl phosphite ligand having 6 to 24 carbon atoms or an alkyl phosphite ligand having 1 to 10 carbon atoms, an aryl arsine ligand having 6 to 24 carbon atoms or an alkyl arsine ligand having 1 to 10 carbon atoms, an aryl amine ligand having 6 to 24 carbon atoms or an alkyl amine ligand having 1 to 10 carbon atoms, a pyridine ligand, an aryl sulfoxide ligand having 6 to 24 carbon atoms or an alkyl sulfoxide ligand having 1 to 10 carbon atoms, an aryl ether ligand having 6 to 24 carbon atoms or an alkyl ether ligand having 1 to 10 carbon atoms, or an aryl amide ligand having 6 to 24 carbon atoms or an alkyl amide ligand having 1 to 10 carbon atoms, and these may each be substituted with a phenyl group, and the phenyl group may optionally be further substituted with a halogen, an alkyl group having 1 to 5 carbon atoms, or an alkoxy group having 1 to 5 carbon atoms.

The term "phosphine" includes, for example, PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(isopropyl)₃, P(CHCH₃(CH₂CH₃))₃, P(cyclopentyl)₃, P(cyclohexyl)₃, P(neopentyl)₃, and P(neophenyl)₃.

The term "phosphinic acid ester" includes, for example, triphenyl phosphinate, tricyclohexyl phosphinate, triisopropyl phosphinate, and methyl diphenyl phosphinate.

The term "phosphite" includes, for example, triphenyl phosphite, tricyclohexyl phosphite, tri-tert-butyl phosphite, triisopropyl phosphite, and methyl diphenyl phosphite.

The term "stibine" includes, for example, triphenylstibine, tricyclohexylstibine, and trimethylstibine.

The term "aryloxy" includes, for example, 2-tert-butyl-4,5-dimethylphenoxy.

The term "sulfonate" includes, for example, trifluoromethanesulfonate, tosylate, and mesylate.

The term "sulfoxide" includes, for example, (CH₃)₂S(=O) and (C₆H₅)₂S=O.

The term "thioether" includes, for example, CH₃SCH₃, C₆H₅SCH₃, CH₃OCH₂CH₂SCH₃, and tetrahydrothiophene.

The term "pyridine" includes, for example, pyridine, picolines (α-, β-, and γ-picoline), lutidines (2,3-, 2,4-, 2,5-, 2,6-, 3,4-, and 3,5-lutidine), collidine (2,4,6-trimethylpyridine), trifluoromethylpyridine, phenylpyridine, 4-(dimethylamino)pyridine, chloropyridines, bromopyridines, nitropyridines, quinoline, pyrimidine, pyrrole, imidazole, and phenylimidazole.

In the imidazolidine ligand, the hydrogen atoms bonded to the carbon or nitrogen atoms constituting the imidazolidine ring may be substituted with a straight-chain or branched alkyl group having 1 to 30 carbon atoms, a cycloalkyl group having 3 to 20 carbon atoms, an alkenyl group having 2 to 20 carbon atoms, an alkynyl group having 2 to 20 carbon atoms, an aryl group having 6 to 24 carbon atoms, a carboxylate having 1 to 20 carbon atoms, an alkoxy group having 1 to 20 carbon atoms, an alkenyloxy group having 2 to 20 carbon atoms, an alkynyloxy group having 2 to 20 carbon atoms, an aryloxy group having 6 to 20 carbon atoms, an alkoxycarbonyl group having 2 to 20 carbon atoms, an alkylthio group having 1 to 20 carbon atoms, an arylthio group having 6 to 20 carbon atoms, an alkylsulfonyl group having 1 to 20 carbon atoms, an alkylsulfonate having 1 to 20 carbon atoms, an arylsulfonate having 6 to 20 carbon atoms, or an alkylsulfinyl group having 1 to 20 carbon atoms.

In the above general formulae (1), (2), and (3), R¹, R², and R³ each independently represent hydrogen, an alkyl group, a cycloalkyl group, an alkenyl group, an alkynyl group, an aryl group, an aralkyl group, a carboxylate group, an alkoxy group, an alkenyloxy group, an alkynyloxy group, an aryloxy group, an alkoxycarbonyl group, an alkylamino group, an alkylthio group, an arylthio group, an alkylsulfonyl group, or an alkylsulfinyl group, wherein these groups may each be substituted with one or more alkyl groups, halogens, alkoxy groups, aryl groups, or heteroaryl groups.

Further, as the alkyl group, an alkyl group having 1 to 30 carbon atoms is preferred; as the cycloalkyl group, a cycloalkyl group having 3 to 20 carbon atoms is preferred; as the alkenyl group, an alkenyl group having 2 to 20 carbon atoms is preferred; as the alkynyl group, an alkynyl group having 2 to 20 carbon atoms is preferred; as the aryl group, an aryl group having 6 to 24 carbon atoms is preferred; as the aralkyl group, an aralkyl group having 7 to 24 carbon atoms is preferred; as the carboxylate group, a carboxylate group having 1 to 20 carbon atoms is preferred; as the alkoxy group, an alkoxy group having 1 to 20 carbon atoms is preferred; as the alkenyloxy group, an alkenyloxy group having 2 to 20 carbon atoms is preferred; as the alkynyloxy group, an alkynyloxy group having 2 to 20 carbon atoms is preferred; as the aryloxy group, an aryloxy group having 6 to 24 carbon atoms is preferred; as the alkoxycarbonyl group, an alkoxycarbonyl group having 2 to 20 carbon atoms is preferred; as the alkylamino group, an alkylamino group having 1 to 30 carbon atoms is preferred; as the alkylthio group, an alkylthio group having 1 to 30 carbon atoms is preferred; as the arylthio group, an arylthio group having 6 to 24 carbon atoms is preferred; as the alkylsulfonyl group, an alkylsulfonyl group having 1 to 20 carbon atoms is preferred; and as the alkylsulfinyl group, an alkylsulfinyl group having 1 to 20 carbon atoms is preferred.

In one embodiment, one of R¹ and R² is hydrogen, and the other is an alkyl group having 1 to 20 carbon atoms, a cycloalkyl group having 3 to 10 carbon atoms, an alkenyl group having 2 to 20 carbon atoms, an alkynyl group having 2 to 20 carbon atoms, an aryl group having 6 to 24 carbon atoms, an aralkyl group having 7 to 24 carbon atoms, a carboxylate group having 1 to 20 carbon atoms, an alkoxy group having 1 to 20 carbon atoms, an alkenyloxy group having 2 to 20 carbon atoms, an alkynyloxy group having 2 to 20 carbon atoms, an aryloxy group having 6 to 24 carbon atoms, an alkoxycarbonyl group having 2 to 20 carbon atoms, an alkylamino group having 1 to 30 carbon atoms, an alkylthio group having 1 to 30 carbon atoms, an arylthio group having 6 to 24 carbon atoms, an alkylsulfonyl group having 1 to 20 carbon atoms, or an alkylsulfinyl group having 1 to 20 carbon atoms, and these groups may each be substituted with one or more alkyl groups, halogens, alkoxy groups, aryl groups, or heteroaryl groups.

In the above general formulae (1), (2), and (3), L¹ and L² may be bonded to each other to form a ring. The ring formed by the bonding of L¹ and L² may be aliphatic or aromatic, and may optionally be substituted and contain one or more hetero atoms. Examples of hetero atoms include oxygen, sulfur, nitrogen, and phosphorus.

In the above general formulae (1), (2), and (3), R¹ and R² may be bonded to each other to form a ring. The ring formed by R¹ and R² together with the common carbon atom to which R¹ and R² are bonded may be aliphatic or aromatic, and may optionally be substituted and contain one or more hetero atoms.

In the above general formulae (1), (2), and (3), L¹ and R¹ may be bonded to each other to form a ring. The ring formed by the bonding of L¹ and R¹ may be aliphatic or aromatic, and may optionally be substituted and contain one or more hetero atoms. Examples of hetero atoms include oxygen, sulfur, nitrogen, and phosphorus.

As the catalyst represented by the above general formula (1), a catalyst represented by any of the following structural formulae (1-1) to (1-3): 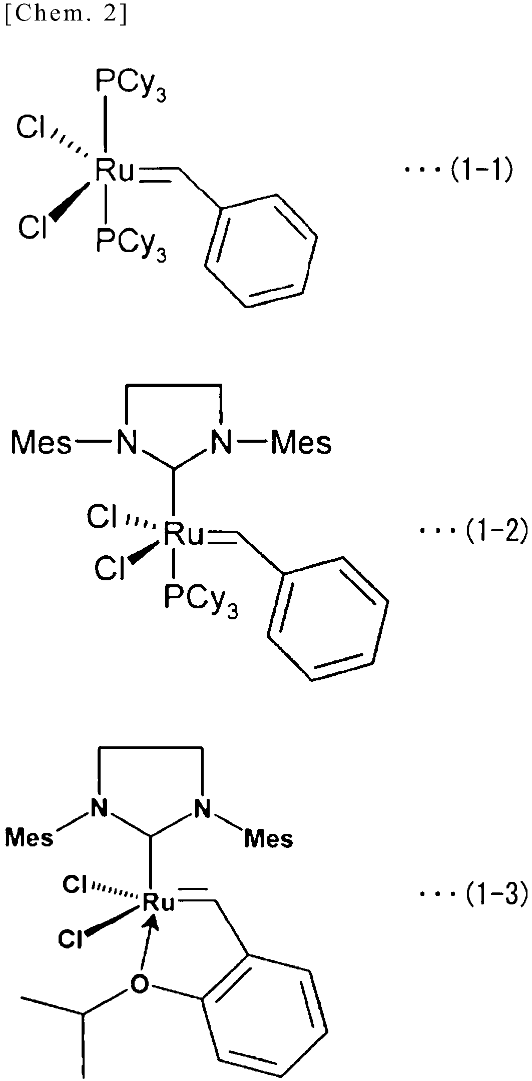 [in the formulae, Cy represents a cyclohexyl group, and Mes represents a mesityl group (also referred to as "2,4,6-trimethylphenyl group")] is preferable.

The catalyst of structural formula (1-1) is referred to as a Grubbs first-generation catalyst, the catalyst of structural formula (1-2) is referred to as a Grubbs second-generation catalyst, and the catalyst of structural formula (1-3) is referred to as a Grubbs-Hoveyda second-generation catalyst. When a catalyst represented by any of structural formulae (1-1) to (1-3) is used, the decomposition reaction (metathesis decomposition) of diene rubber in the crosslinked rubber proceeds more rapidly.

As the catalyst represented by the above general formula (2), a catalyst represented by the following structural formula (2-1): 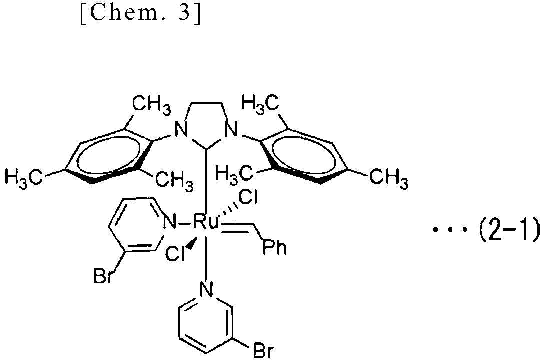 is preferable. The catalyst of structural formula (2-1) is referred to as a Grubbs third-generation catalyst. When a catalyst represented by structural formula (2-1) is used, the decomposition reaction (metathesis decomposition) of diene rubber in the crosslinked rubber proceeds more rapidly.

As the catalyst represented by the above general formula (3), a catalyst represented by the following structural formula (3-1): 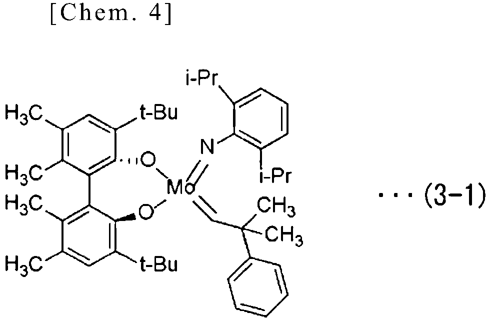 can be mentioned.

The amount of the catalyst is preferably 0.1 parts by mass or more, more preferably 1 part by mass or more, and preferably 10 parts by mass or less, more preferably 8 parts by mass or less, per 100 parts by mass of the diene rubber. If the amount of the catalyst is 0.1 parts by mass or more per 100 parts by mass of the diene rubber, the decomposition reaction of the diene rubber proceeds further, and if the amount of the catalyst is 10 parts by mass or less per 100 parts by mass of the diene rubber, it is preferable from the viewpoint of cost.

The decomposition by the metathesis catalyst (hereinafter, sometimes simply referred to as "metathesis decomposition") is preferably carried out at 20°C or higher and 200°C or lower. By performing the metathesis decomposition at 20°C or higher, the rate of the decomposition reaction of diene rubber in the crosslinked rubber is improved, and by performing the metathesis decomposition at 200°C or lower, decomposition of the catalyst (metathesis catalyst) represented by the above general formula (1), (2), or (3) can be suppressed, and after decomposition, the retention rate (selectivity) of the monomer skeleton of the diene rubber in the crosslinked rubber is improved. From the viewpoint of improving the decomposition reaction rate of diene rubber, the metathesis decomposition is more preferably performed at 25°C or higher, and from the viewpoint of suppressing decomposition of the metathesis catalyst and improving the selectivity of the product retaining the monomer skeleton, it is more preferably performed at 100°C or lower.

The metathesis decomposition can be carried out at any pressure, including reduced pressure, atmospheric pressure, or increased pressure. As an example, the reaction pressure is preferably 1 kPa to 10 MPa, more preferably 10 kPa to 1 MPa, and even more preferably 50 kPa to 500 kPa.

In the metathesis decomposition, the catalyst represented by the above general formula (1), (2), or (3) may be dissolved in a solvent, or the crosslinked rubber may be immersed in a solvent. By allowing the catalyst to act on the crosslinked rubber in a solvent, the decomposition reaction of diene rubber in the crosslinked rubber proceeds more easily.

Here, as the solvent, any solvent that does not inhibit the decomposition reaction can be used, and examples include ethers, aliphatic hydrocarbons, alicyclic hydrocarbons, and aromatic hydrocarbons (aromatic solvents). More specifically, as the solvent, tetrahydrofuran (THF), hexane, cyclohexane, pentane, cyclopentane, toluene, and xylene are preferred, and toluene and tetrahydrofuran are more preferred. When the solvent is selected from tetrahydrofuran, hexane, cyclohexane, pentane, cyclopentane, toluene, and xylene, the decomposition reaction of diene rubber in the crosslinked rubber proceeds even more easily.

The amount of the solvent is preferably 10 mL or more, more preferably 50 mL or more, and preferably 500 mL or less, more preferably 200 mL or less, per 1 g of the crosslinked rubber. If the amount of the solvent is 10 mL or more per 1 g of the crosslinked rubber, the decomposition reaction of diene rubber in the crosslinked rubber proceeds further, and if the amount of the solvent is 500 mL or less per 1 g of the crosslinked rubber, it is preferable from the viewpoint of cost.

The metathesis decomposition may be carried out in the presence of a chain transfer agent (CTA). Examples of the chain transfer agent include cis-1,4-diacetoxy-2-butene, cis-1,4-dibenzyl-oxy-2-butene, and the like.

The amount of the chain transfer agent is preferably in the range of 1 to 100 mol per 1 mol of the catalyst.

### - Second Decomposition Method (Low-Temperature Thermal Decomposition) -

In the second decomposition method, the crosslinked rubber is thermally decomposed at 150°C or higher and 400°C or lower. By performing the thermal decomposition at 150°C or higher, the rate of the decomposition reaction of diene rubber in the crosslinked rubber is improved, and by performing the thermal decomposition at 400°C or lower, gasification and aromatization of the decomposition products can be suppressed, and after decomposition, the retention rate (selectivity) of the monomer skeleton of the diene rubber in the crosslinked rubber is improved. From the viewpoint of improving the decomposition reaction rate of diene rubber, the thermal decomposition is preferably performed at 175°C or higher, more preferably at 190°C or higher. Also, from the viewpoint of improving the selectivity of the product retaining the monomer skeleton, it is preferably performed at 350°C or lower, more preferably at 300°C or lower.

The second decomposition method is preferably carried out under an inert gas atmosphere. By performing the thermal decomposition under an inert gas atmosphere, oxidation or reduction of the decomposition products can be suppressed, and in particular, hydrogenation of double bonds in oligomers or monomers in the decomposition products can be suppressed. In addition, oxidation of the recovered carbon black can also be suppressed. Examples of the inert gas include nitrogen, carbon dioxide, argon, helium, and the like.

To perform the thermal decomposition under an inert gas atmosphere, for example, when using a batch-type reactor, the atmosphere charged into the reactor may be an inert gas, and when using a flow-type reactor, the atmosphere circulated through the reactor may be an inert gas. Note that hydrogen may be generated during the thermal decomposition, but the hydrogen generated is not considered as part of the atmosphere for the thermal decomposition.

The thermal decomposition can be carried out at any pressure, including reduced pressure, atmospheric pressure, or increased pressure, but is preferably performed under reduced pressure or atmospheric pressure. As an example, the reaction pressure for the thermal decomposition is preferably 1000 kPa to 65 kPa. By performing the thermal decomposition under reduced pressure or atmospheric pressure, polymerization (repolymerization) of oligomers or monomers in the decomposition products can be suppressed.

The reaction time for the thermal decomposition is not particularly limited. As an example, the reaction time for the thermal decomposition is preferably 1 minute to 180 minutes, more preferably 3 minutes to 60 minutes, and even more preferably 5 minutes to 30 minutes.

The thermal decomposition may be carried out with or without a catalyst, but it is preferable not to use a catalyst. By not using a catalyst in the thermal decomposition, costs can be reduced. If a catalyst is used, any catalyst that promotes the decomposition reaction of the crosslinked rubber can be used.

### - Third Decomposition Method (Solvolysis) -

In the third decomposition method, the crosslinked rubber is decomposed in a solvent. When the crosslinked rubber is decomposed in a solvent, the crosslinked rubber swells due to the solvent. By decomposing the crosslinked rubber under solvent swelling, gasification and aromatization of the decomposition products can be suppressed, and compared to ordinary high-temperature thermal decomposition, a decomposition product (liquid polymer) with a higher retention rate of the constituent monomer skeletons (isoprene skeleton, butadiene skeleton, etc.) of the diene rubber can be obtained.

As the solvent, various solvents having the effect of swelling the crosslinked rubber can be used, and examples include aromatic solvents, aliphatic solvents, alicyclic solvents, ester solvents, ethers, and the like. Examples of aromatic solvents include benzene, toluene, xylene, and the like; examples of aliphatic solvents include pentane, hexane, heptane, and the like; examples of alicyclic solvents include cyclopentane, cyclohexane, and the like; examples of ester solvents include ethyl acetate, propyl acetate, butyl acetate, and the like; and examples of ethers include tetrahydrofuran (THF), and the like. Among these, as the solvent, at least one selected from the group consisting of toluene, xylene, and cyclohexane is preferred, and toluene is particularly preferred. When toluene, xylene, or cyclohexane is used as the solvent, a liquid polymer with an even higher retention rate of the constituent monomer skeletons (isoprene skeleton, butadiene skeleton, etc.) of the diene rubber can be obtained.

The amount of the solvent used is preferably 1 mL or more, more preferably 5 mL or more, and preferably 500 mL or less, more preferably 200 mL or less, per 1 g of the crosslinked rubber. When the amount of the solvent used is 10 mL or more per 1 g of the crosslinked rubber, the decomposition reaction of the diene rubber in the crosslinked rubber proceeds further, and when the amount of the solvent used is 500 mL or less per 1 g of the crosslinked rubber, it is preferable from the viewpoint of cost.

The temperature for decomposition in the solvent is preferably 150 to 300°C. By performing the decomposition in the solvent at 150°C or higher, the rate of the decomposition reaction of the diene rubber in the crosslinked rubber is improved, and by performing the decomposition in the solvent at 300°C or lower, gasification and aromatization of the decomposition products can be suppressed, and after decomposition, the retention rate (selectivity) of the skeleton of the constituent monomers of the diene rubber in the crosslinked rubber is improved. Further, for example, when the crosslinked rubber contains carbon black, it can be recovered as high-quality carbon black and reused. From the viewpoint of improving the decomposition reaction rate of the crosslinked rubber, the decomposition in the solvent is preferably performed at 150°C or higher, more preferably at 280°C or higher. From the viewpoint of improving the selectivity of the product retaining the monomer skeleton, it is preferably 180°C or lower, more preferably 250°C or lower.

The decomposition time in the solvent is not particularly limited. As an example, the decomposition time in the solvent is preferably 1 hour to 48 hours, more preferably 3 hours to 18 hours. By performing the decomposition in the solvent for 1 hour or more, the decomposition rate of the crosslinked rubber is improved. On the other hand, if the reaction time becomes too long, the skeleton (double bonds, etc.) of the constituent monomers of the diene rubber may be decomposed, or the decomposition products may be gasified or aromatized, but by performing the decomposition in the solvent for 48 hours or less, decomposition of the monomer skeleton and gasification or aromatization of the decomposition products can be suppressed, and after decomposition, the retention rate (selectivity) of the skeleton of the constituent monomers of the diene rubber in the crosslinked rubber is improved.

It is preferable that the decomposition in the solvent is performed under an inert gas atmosphere. By performing the decomposition in the solvent under an inert gas atmosphere, active species (such as oxygen, hydrogen, etc.) dissolved in the solvent can be reduced, and oxidation or reduction of the decomposition products can be suppressed, and in particular, hydrogenation of double bonds in oligomers or monomers in the decomposition products can be suppressed. Further, when the crosslinked rubber contains carbon black, oxidation of the carbon black can also be suppressed. Here, examples of the inert gas include nitrogen, carbon dioxide, argon, helium, and the like.

In order to perform the decomposition in the solvent under an inert gas atmosphere, for example, when using a batch-type reactor, it is sufficient to make the atmosphere in the reactor an inert gas, and when using a flow-type reactor, it is sufficient to make the atmosphere flowing through the reactor an inert gas. Note that hydrogen may be generated during the decomposition in the solvent, but the generated hydrogen is not considered as part of the atmosphere for the decomposition in the solvent.

The decomposition in the solvent can be carried out at any pressure, and can be performed under reduced pressure, atmospheric pressure, or increased pressure. As an example, the reaction pressure is preferably 1 kPa to 10 MPa, more preferably 10 kPa to 5 MPa, and even more preferably 50 kPa to 2 MPa.

A catalyst may or may not be used for the decomposition in the solvent, but it is preferable not to use a catalyst. By not using a catalyst for the decomposition in the solvent, costs can be reduced. When a catalyst is used, any catalyst that has the effect of promoting the decomposition reaction of the crosslinked rubber can be used.

### - Fourth Decomposition Method (Radical Decomposition) -

In the fourth decomposition method, a radical initiator is applied to the crosslinked rubber under an atmosphere containing oxygen gas. It is considered that the radical initiator mainly acts on the crosslinked sites formed by sulfur and cleaves the crosslinked bonds. Therefore, in the case of diene rubber, it is considered that the main chain skeleton is basically maintained even after the decomposition reaction.

As the radical initiator, various conventionally known types can be used, but from the viewpoint of reaction efficiency, peroxides and azo compounds are preferable, and peroxides are more preferably used.

Examples of peroxides include acyl peroxides, percarboxylic acids, dialkyl peroxides, alkyl hydroperoxides, and the like. Among these, from the viewpoint of reaction rate, acyl peroxides and percarboxylic acids are preferably used, and acyl peroxides are more preferably used.

Specific examples thereof include, as acyl peroxides, benzoyl peroxide, toluoyl peroxide, chlorobenzoyl peroxide, dichlorobenzoyl peroxide, methoxybenzoyl peroxide, phthaloyl peroxide, acetyl peroxide, propanoyl peroxide, caprylyl peroxide, decanoyl peroxide, lauroyl peroxide, myristoyl peroxide, stearoyl peroxide, and the like. Among acyl peroxides, from the viewpoints of reaction rate, cost, and ease of procurement, benzoyl peroxide, lauroyl peroxide, and acetyl peroxide are preferably used. From the viewpoints of reaction rate and stability of the peroxide, lauroyl peroxide is preferable to benzoyl peroxide.

Further, as percarboxylic acids, perbenzoic acid, chloroperbenzoic acid, peracetic acid, perpropionic acid, and the like can be mentioned. Furthermore, as dialkyl peroxides, di-tert-butyl peroxide, dicumyl peroxide, tert-butyl cumyl peroxide, and the like can be mentioned, and as alkyl hydroperoxides, tert-butyl hydroperoxide, cumene hydroperoxide, and the like can be mentioned.

On the other hand, as azo compounds, azobisisobutyronitrile, azobis-2,4-dimethylvaleronitrile, azobiscyclohexanecarbonitrile, azobisisobutyric acid methyl ester, and the like can be mentioned.

These radical initiators may be in the form of hydrates from the viewpoints of safety and ease of procurement. By using a suitable initiator, the crosslinked rubber can be efficiently decomposed under mild conditions.

The amount of the radical initiator used is preferably 0.1 parts by mass or more, more preferably 1 part by mass or more, and preferably 30 parts by mass or less, more preferably 20 parts by mass or less, per 100 parts by mass of the crosslinked rubber. When the amount of the radical initiator is 0.1 parts by mass or more per 100 parts by mass of the crosslinked rubber, the decomposition reaction of the crosslinked rubber proceeds more rapidly, and when the amount of the radical initiator is 30 parts by mass or less per 100 parts by mass of the crosslinked rubber, it is preferable from the viewpoint of cost.

The fourth decomposition method is carried out under an atmosphere containing oxygen gas. The concentration (volume %) of oxygen gas in the reaction atmosphere is usually 1 to 100%, preferably 1 to 80%, and more preferably 5 to 50%, including about 20%, which is the oxygen concentration in air. When the concentration of oxygen gas is not 100%, the remaining gas component may be an inert gas such as nitrogen gas. In general, the higher the oxygen concentration, the more advantageous the decomposition reaction of the fourth decomposition method, but undesirable side reactions are also more likely to occur, so when the oxygen concentration is high, it is preferable to appropriately control the reaction time, reaction temperature, and the like.

On the other hand, when using air with an oxygen concentration of about 20%, there is no need to separately prepare oxygen gas, which is advantageous in terms of equipment and economy. In the reaction under an air atmosphere, when the amount of crosslinked rubber is small, the reaction proceeds even in a closed system container with a sufficiently large internal volume. In such a case, the internal volume of the reaction vessel is generally 50 parts by volume or more, more preferably 100 parts by volume or more, per 1 part by volume of the crosslinked rubber.

When the fourth decomposition method is performed in a closed system, if the amount of crosslinked rubber increases, a reaction vessel with a large internal volume is required, which is not preferable from the viewpoint of equipment. Therefore, from the viewpoint of equipment, it is preferable to perform the reaction in a non-closed system in which air or the like can circulate. To make the reaction system non-closed, methods such as opening a part of the reaction vessel, installing a membrane that allows air or the like to circulate, or overflowing air or the like can be considered. In addition, a method in which air or the like is continuously or intermittently blown into the solution during the reaction is also an advantageous form. The blowing rate in such a case is not particularly limited, but is usually 1 to 1000 mL/min, preferably 2 to 500 mL/min, more preferably 3 to 200 mL/min, per 1 g of crosslinked rubber.

In the fourth decomposition method, the radical initiator may be dissolved in a solvent for use, or the crosslinked rubber may be immersed in a solvent for decomposition. By applying the radical initiator to the crosslinked rubber in the solvent, the decomposition of the crosslinked rubber is facilitated.

Here, as the solvent, any solvent that does not inhibit the decomposition reaction can be used, and examples include aromatic hydrocarbons (aromatic solvents), chlorinated hydrocarbons, aliphatic hydrocarbons, alicyclic hydrocarbons, ethers, and the like.

Specifically, examples of aromatic hydrocarbons include toluene, xylene, ethylbenzene, trimethylbenzene, propylbenzene, and the like; examples of chlorinated hydrocarbons include chloroform, dichloromethane, dichloroethane, trichloroethane, tetrachloroethane, tetrachloroethylene, chlorobenzene, dichlorobenzene, and the like; examples of aliphatic hydrocarbons include pentane, hexane, octane, and the like; examples of alicyclic hydrocarbons include cyclopentane, cyclohexane, cyclooctane, and the like; and examples of ethers include tetrahydrofuran, methyltetrahydrofuran, tetrahydropyran, dioxane, and the like.

Among these, from the viewpoints of reaction rate and ease of procurement, aromatic hydrocarbons and chlorinated hydrocarbons are preferable. Specific examples thereof include toluene, xylene, ethylbenzene, chloroform, chlorobenzene, dichlorobenzene, and the like. Among aromatic hydrocarbons, from the viewpoint of reaction rate, ethylbenzene is preferable to toluene.

A solvent suitable for the decomposition reaction also depends on the type of crosslinked rubber. For example, in the case of crosslinked rubber of NR type, IR type, or BR type, aromatic hydrocarbons and chlorinated hydrocarbons are preferable from the viewpoints of reaction rate and solubility of the products, and specific examples thereof include toluene, ethylbenzene, chloroform, chlorobenzene, and the like. On the other hand, in the case of SBR type crosslinked rubber, chlorinated hydrocarbons are more preferable from the viewpoint of reaction rate, and specific examples thereof include chloroform, chlorobenzene, and the like.

By using a preferable solvent, the decomposition of the crosslinked rubber is facilitated, and the liquid polymer can be produced more efficiently.

The amount of the solvent used is preferably 2 mL or more, more preferably 10 mL or more, and preferably 100 mL or less, more preferably 50 mL or less, per 1 g of the crosslinked rubber. When the amount of the solvent used is 2 mL per 1 g of the crosslinked rubber, the decomposition reaction of the crosslinked rubber is promoted, and when the amount of the solvent used is 50 mL or less per 1 g of the crosslinked rubber, it is preferable from the viewpoint of cost.

The fourth decomposition method is preferably performed at 0°C or higher and 200°C or lower. By performing the fourth decomposition method at 0°C or higher, the rate of the decomposition reaction of the crosslinked rubber is improved, and by performing the fourth decomposition method at 200°C or lower, the retention rate (selectivity) of the monomer skeleton in the crosslinked rubber is improved.

From the viewpoint of improving the decomposition reaction rate of the crosslinked rubber, the fourth decomposition method is more preferably performed at 10°C or higher, and from the viewpoint of improving the selectivity of the product retaining the monomer skeleton, more preferably at 150°C or lower.

Further, when a peroxide-type radical initiator is used, the decomposition efficiency is high, so the reaction proceeds at a low temperature of 60°C or lower. Even near room temperature (20°C to 30°C), the reaction proceeds smoothly, so there is no need for special equipment for heating or cooling, which is also an advantage when using a peroxide-type radical initiator.

The fourth decomposition method can be carried out at any pressure, and can be performed under reduced pressure, atmospheric pressure, or increased pressure. Specifically, the reaction pressure is preferably 1 kPa to 10 MPa, more preferably 10 kPa to 1 MPa, and even more preferably 50 kPa to 500 kPa.

In the fourth decomposition method, it is important to efficiently stir the raw material crosslinked rubber, radical initiator, and solvent. As stirring methods, various conventionally known methods can be used, such as using a magnetic stirrer, a mechanical stirrer, or a shaker.

In addition, to promote the reaction, ultrasonic irradiation, microwave irradiation, light irradiation, and the like may also be used. These may also be used in combination.

### - Other Decomposition Methods -

The method for decomposing crosslinked rubber to obtain the liquid polymer of the present embodiment is not limited to the above-described first, second, third, and fourth decomposition methods, and any decomposition method may be used as long as the basic structure of the polymer is retained at 30% or more. Further, a decomposition method in which the polymer structure is retained at 50% or more is more preferable, and a decomposition method in which the polymer structure is retained at 70% or more is even more preferable.

### <Mixture of Liquid Polymer and Recovered Carbon Black>

A mixture of a liquid polymer and recovered carbon black according to a first embodiment of the present disclosure is a mixture of a liquid polymer and recovered carbon black obtained by decomposition of crosslinked rubber containing diene rubber and carbon black. In the mixture of the liquid polymer and recovered carbon black according to the first embodiment, the liquid polymer is the above-described liquid polymer of the present embodiment.

The mixture of the liquid polymer and recovered carbon black according to the first embodiment can be obtained after the above-described decomposition of the crosslinked rubber, without separating or collecting the recovered carbon black. By compounding the mixture of the liquid polymer and recovered carbon black into a rubber composition without separating or collecting the recovered carbon black, the productivity of the rubber composition can be improved.

Further, when such a mixture of the liquid polymer and recovered carbon black according to the first embodiment is reused in a rubber composition, the liquid polymer acts as a softener, making it easier to knead the rubber composition.

A mixture of a liquid polymer and recovered carbon black according to a second embodiment of the present disclosure is a mixture of a liquid polymer and recovered carbon black obtained by decomposition of crosslinked rubber containing diene rubber and carbon black. In the mixture of the liquid polymer and recovered carbon black according to the second embodiment, the liquid polymer is obtained by removing some or all of components having a molecular weight of 5,000 or less from the above-described liquid polymer of the present embodiment, and is characterized in that the proportion of components having a molecular weight of 15,000 or less is 30 mass% or less.

The mixture of the liquid polymer and recovered carbon black according to the second embodiment can be obtained by removing some or all of the low molecular weight components in the liquid polymer after the above-described decomposition of the crosslinked rubber, without separating or collecting the recovered carbon black. By compounding the mixture of the liquid polymer and recovered carbon black into a rubber composition without separating or collecting the recovered carbon black, the productivity of the rubber composition can be improved. Further, by removing some or all of the low molecular weight components in the liquid polymer, when the mixture of the liquid polymer and recovered carbon black is compounded into a rubber composition, the plasticizing effect by the low molecular weight components can be suppressed, making it easier to obtain a rubber composition having desired physical properties.

In the mixture of the liquid polymer and recovered carbon black according to the second embodiment, it is preferable that the proportion of components having a molecular weight of 15,000 or less in the liquid polymer is 30 mass% or less. When the proportion of components having a molecular weight of 15,000 or less is 30 mass% or less, the plasticizing effect can be suppressed, making it easier to obtain a rubber composition having desired physical properties.

Here, gel permeation chromatography (GPC) is used for the measurement of molecular weight.

As described above, the mixture of the liquid polymer and recovered carbon black can be compounded into a rubber composition. The rubber composition may contain, in addition to the mixture of the liquid polymer and recovered carbon black, a rubber component and compounding agents commonly used in the rubber industry, such as fillers (carbon black, silica, calcium carbonate, etc.), silane coupling agents, antioxidants, wax, softeners, processing aids, resins, surfactants, organic acids (such as stearic acid), zinc oxide (zinc white), vulcanization accelerators, crosslinking agents (sulfur, peroxides, etc.), and the like.

The rubber composition can be used for various rubber products such as tires, rubber crawlers, seismic isolation rubber, and the like.

### <Method for Recovering Diene Monomer>

### - Method for Recovering Diene Monomer According to First Embodiment -

A method for recovering a diene monomer according to a first embodiment of the present disclosure is characterized in that the above-described liquid polymer of the present embodiment is thermally decomposed at 300°C to 950°C under an inert gas atmosphere and in the presence of a catalyst. According to the method for recovering a diene monomer of the first embodiment, a diene monomer can be recovered at a high yield.

By performing the thermal decomposition at 300°C or higher, the rate of the decomposition reaction of the liquid polymer is improved, and by performing the thermal decomposition at 950°C or lower, the selectivity of the product retaining the monomer skeleton is improved. From the viewpoint of improving the decomposition reaction rate, the temperature for the thermal decomposition is preferably 500°C or higher, and from the viewpoint of improving the selectivity of the product retaining the monomer skeleton, preferably 900°C or lower.

In a preferred mode of the aforementioned thermal decomposition, the liquid polymer is heated under an inert gas atmosphere at a heating rate of 800°C/min or more from 100°C to 450°C, and then thermally decomposed at 450°C to 950°C. When the heating rate from 100°C to 450°C is 800°C/min or more, the generation of decomposition products with higher molecular weight than diene monomers, such as oligomers, is suppressed, and after decomposition, the retention rate (selectivity) of the skeleton of the constituent monomers of the liquid polymer is further improved, and the yield of a diene monomer is further increased.

In another preferred mode of the aforementioned thermal decomposition, the liquid polymer is heated under an inert gas atmosphere at a heating rate of 2000°C/min or more from 100°C to 450°C, and then thermally decomposed at 450°C to 950°C. When the heating rate from 100°C to 450°C is 2000°C/min or more, the generation of decomposition products with higher molecular weight than diene monomers, such as oligomers, is suppressed, and after decomposition, the retention rate (selectivity) of the skeleton of the constituent monomers of the liquid polymer is further improved, and the yield of a diene monomer is further increased.

In another preferred mode of the aforementioned thermal decomposition, the liquid polymer is heated under an inert gas atmosphere at a heating rate of 800°C/min or more from 100°C to 600°C, and then thermally decomposed at 650°C to 950°C. When the heating rate from 100°C to 600°C is 800°C/min or more, the generation of decomposition products with higher molecular weight than diene monomers, such as oligomers, is suppressed, and after decomposition, the retention rate (selectivity) of the skeleton of the constituent monomers of the liquid polymer is further improved, and the yield of a diene monomer is further increased.

In another preferred mode of the aforementioned thermal decomposition, the liquid polymer is heated under an inert gas atmosphere at a heating rate of 2000°C/min or more from 100°C to 600°C, and then thermally decomposed at 650°C to 950°C. When the heating rate from 100°C to 600°C is 2000°C/min or more, the generation of decomposition products with higher molecular weight than diene monomers, such as oligomers, is suppressed, and after decomposition, the retention rate (selectivity) of the skeleton of the constituent monomers of the liquid polymer is further improved, and the yield of a diene monomer is further increased.

In another preferred mode of the aforementioned thermal decomposition, the liquid polymer is mixed with a medium selected from fatty acid esters and hydrocarbons, and then thermally decomposed at 300°C to 950°C under an inert gas atmosphere and in the presence of a catalyst. By thermally decomposing after mixing the liquid polymer with the medium, the decomposition of the liquid polymer into a diene monomer is promoted, and a diene monomer can be obtained at a high yield.

The aforementioned thermal decomposition is carried out under an inert gas atmosphere. By carrying out the thermal decomposition under an inert gas atmosphere, oxidation and reduction of the decomposition products can be suppressed, and in particular, hydrogenation of double bonds in the monomers among the decomposition products can be suppressed. Here, examples of the inert gas include nitrogen, carbon dioxide, argon, and helium.

To carry out the aforementioned thermal decomposition under an inert gas atmosphere, for example, when using a batch-type reactor, it suffices to set the atmosphere charged into the reactor as an inert gas, and when using a flow-type reactor, it suffices to set the atmosphere flowing through the reactor as an inert gas. Note that hydrogen may be generated during the aforementioned thermal decomposition, but the generated hydrogen is not considered as part of the thermal decomposition atmosphere.

The aforementioned thermal decomposition may be carried out under pressure, and the liquid polymer may be thermally decomposed in a solvent. Here, as the solvent, any solvent that does not inhibit the decomposition reaction can be used, and examples include ethers, aliphatic hydrocarbons, alicyclic hydrocarbons, and aromatic hydrocarbons (aromatic solvents). More specifically, preferred solvents include tetrahydrofuran (THF), hexane, cyclohexane, pentane, cyclopentane, toluene, and xylene, with toluene and tetrahydrofuran being more preferred.

The amount of the solvent used is preferably 10 mL or more, more preferably 50 mL or more, and preferably 500 mL or less, more preferably 200 mL or less, per 1 g of the liquid polymer. If the amount of the solvent used is 10 mL or more per 1 g of the liquid polymer, the decomposition reaction proceeds further, and if the amount of the solvent used is 500 mL or less per 1 g of the liquid polymer, it is preferable from the viewpoint of cost.

The aforementioned thermal decomposition is carried out in the presence of a catalyst. Here, the catalyst may be an acidic catalyst, a neutral catalyst, or a basic catalyst, and among these, a basic catalyst is preferred. It is further preferred to carry out the process in the presence of at least one basic catalyst selected from the group consisting of TiO₂, ZrO₂, MgO, La₂O₃, CeO₂, Y₂O₃, Li₂CO₃, Na₂CO₃, Rb₂CO₃, and Cs₂CO₃. By carrying out the aforementioned thermal decomposition in the presence of these basic catalysts, the rate of the decomposition reaction (depolymerization reaction) of the liquid polymer is improved, and the selectivity for products retaining the monomer skeleton is improved. These catalysts may be used alone or in combination of two or more.

The amount of the catalyst used is preferably 1 part by mass or more, more preferably 10 parts by mass or more, even more preferably 100 parts by mass or more, and preferably 8000 parts by mass or less, more preferably 4000 parts by mass or less, and even more preferably 500 parts by mass or less, per 100 parts by mass of the liquid polymer. If the amount of the catalyst used is 100 parts by mass or more per 100 parts by mass of the liquid polymer, the decomposition reaction proceeds further, and if the amount of the catalyst used is 500 parts by mass or less per 100 parts by mass of the liquid polymer, it is preferable from the viewpoint of cost.

### - Method for Recovering Diene Monomer According to Second Embodiment -

A method for recovering a diene monomer according to a second embodiment of the present disclosure is characterized in that the above-described liquid polymer of the present embodiment is thermally decomposed at 300°C to 450°C under an inert gas atmosphere and in the absence of a catalyst. By the method for recovering a diene monomer according to the second embodiment, a diene monomer can also be recovered at a high yield.

By carrying out the aforementioned thermal decomposition at 300°C or higher, the rate of the decomposition reaction of the liquid polymer is improved and the yield of monomers is increased, and by carrying out the process at 450°C or lower, gasification and aromatization of the decomposition products can be significantly suppressed, and the selectivity for products retaining the monomer skeleton is significantly improved. From the viewpoint of improving the decomposition reaction rate and monomer yield, the aforementioned thermal decomposition is preferably carried out at 320°C or higher, and from the viewpoint of suppressing gasification and aromatization of the decomposition products, it is preferably carried out at 380°C or lower.

The aforementioned thermal decomposition is carried out under an inert gas atmosphere. By carrying out the thermal decomposition under an inert gas atmosphere, oxidation and reduction of the decomposition products can be suppressed, and in particular, hydrogenation of double bonds in monomers among the decomposition products can be suppressed. Here, examples of the inert gas include nitrogen, carbon dioxide, argon, and helium.

To carry out the aforementioned thermal decomposition under an inert gas atmosphere, for example, when using a batch-type reactor, it suffices to set the atmosphere charged into the reactor as an inert gas, and when using a flow-type reactor, it suffices to set the atmosphere flowing through the reactor as an inert gas. Note that hydrogen may be generated during the aforementioned thermal decomposition, but the generated hydrogen is not considered as part of the thermal decomposition atmosphere.

The aforementioned thermal decomposition can be carried out at any pressure, including under reduced pressure, at atmospheric pressure, or under increased pressure, but it is preferably carried out under reduced pressure or at atmospheric pressure. As an example, the reaction pressure for the aforementioned thermal decomposition is preferably 1000 kPa to 67 kPa. By carrying out the thermal decomposition under reduced pressure or at atmospheric pressure, polymerization (repolymerization) of monomers among the decomposition products can be suppressed.

The reaction time for the aforementioned thermal decomposition is not particularly limited. As an example, the reaction time for the aforementioned thermal decomposition is preferably 3 to 60 minutes, and more preferably 5 to 30 minutes.

The aforementioned thermal decomposition is carried out in the absence of a catalyst (that is, without using a catalyst). By not using a catalyst in the aforementioned thermal decomposition, costs can be reduced. Here, "in the absence of a catalyst" means that there is no catalyst having an effect of promoting the decomposition reaction present in the thermal decomposition reaction system.

### - Method for Recovering Diene Monomer According to Third Embodiment -

A method for recovering a diene monomer according to a third embodiment of the present disclosure is characterized in that the above-described liquid polymer of the present embodiment is thermally decomposed at 600°C to 950°C under an inert gas atmosphere and in the absence of a catalyst. By the method for recovering a diene monomer according to the third embodiment, a diene monomer can also be recovered at a high yield.

By carrying out the aforementioned thermal decomposition at 600°C or higher, the rate of the decomposition reaction of the liquid polymer is greatly improved and the yield of monomers is greatly increased, and by carrying out the process at 950°C or lower, gasification and aromatization of the decomposition products can be suppressed, and the selectivity for products retaining the monomer skeleton is improved. From the viewpoint of improving the decomposition reaction rate and monomer yield, the aforementioned thermal decomposition is preferably carried out at 700°C or higher. By carrying out the aforementioned thermal decomposition at 700°C to 900°C, the rate of the decomposition reaction of the liquid polymer can be improved while also improving the selectivity for products retaining the monomer skeleton.

In a preferred mode of the aforementioned thermal decomposition, the liquid polymer is heated under an inert gas atmosphere at a heating rate of 800°C/min or more from 100°C to 450°C, and then thermally decomposed at 600°C to 950°C. When the heating rate from 100°C to 450°C is 800°C/min or more, the generation of decomposition products with higher molecular weight than diene monomers, such as oligomers, is suppressed, and after decomposition, the retention rate (selectivity) of the skeleton of the constituent monomers of the liquid polymer is further improved, and the yield of a diene monomer is further increased.

In another preferred mode of the aforementioned thermal decomposition, the liquid polymer is heated under an inert gas atmosphere at a heating rate of 2000°C/min or more from 100°C to 450°C, and then thermally decomposed at 600°C to 950°C. When the heating rate from 100°C to 450°C is 2000°C/min or more, the generation of decomposition products with higher molecular weight than diene monomers, such as oligomers, is suppressed, and after decomposition, the retention rate (selectivity) of the skeleton of the constituent monomers of the liquid polymer is further improved, and the yield of a diene monomer is further increased.

In another preferred mode of the aforementioned thermal decomposition, the liquid polymer is heated under an inert gas atmosphere at a heating rate of 800°C/min or more from 100°C to 600°C, and then thermally decomposed at 650°C to 950°C. When the heating rate from 100°C to 600°C is 800°C/min or more, the generation of decomposition products with higher molecular weight than diene monomers, such as oligomers, is suppressed, and after decomposition, the retention rate (selectivity) of the skeleton of the constituent monomers of the liquid polymer is further improved, and the yield of a diene monomer is further increased.

In another preferred mode of the aforementioned thermal decomposition, the liquid polymer is heated under an inert gas atmosphere at a heating rate of 2000°C/min or more from 100°C to 600°C, and then thermally decomposed at 650°C to 950°C. When the heating rate from 100°C to 600°C is 2000°C/min or more, the generation of decomposition products with higher molecular weight than diene monomers, such as oligomers, is suppressed, and after decomposition, the retention rate (selectivity) of the skeleton of the constituent monomers of the liquid polymer is further improved, and the yield of a diene monomer is further increased.

In another preferred mode of the aforementioned thermal decomposition, the liquid polymer is mixed with a medium selected from fatty acid esters and hydrocarbons, and then thermally decomposed at 600°C to 950°C under an inert gas atmosphere and in the absence of a catalyst. By thermally decomposing after mixing the liquid polymer with the medium, the decomposition of the liquid polymer into a diene monomer is promoted, and a diene monomer can be obtained at a high yield.

The aforementioned thermal decomposition is carried out under an inert gas atmosphere. By carrying out the thermal decomposition under an inert gas atmosphere, oxidation and reduction of the decomposition products can be suppressed, and in particular, hydrogenation of double bonds in the monomers among the decomposition products can be suppressed. Here, examples of the inert gas include nitrogen, carbon dioxide, argon, and helium.

To carry out the aforementioned thermal decomposition under an inert gas atmosphere, for example, when using a batch-type reactor, it suffices to set the atmosphere charged into the reactor as an inert gas, and when using a flow-type reactor, it suffices to set the atmosphere flowing through the reactor as an inert gas. Note that hydrogen may be generated during the aforementioned thermal decomposition, but the generated hydrogen is not considered as part of the thermal decomposition atmosphere.

The aforementioned thermal decomposition can be carried out at any pressure, including under reduced pressure, at atmospheric pressure, or under increased pressure, but it is preferably carried out under reduced pressure or at atmospheric pressure. As an example, the reaction pressure for the aforementioned thermal decomposition is preferably 1000 kPa to 65 kPa. By carrying out the thermal decomposition under reduced pressure or at atmospheric pressure, polymerization (repolymerization) of monomers among the decomposition products can be suppressed.

The reaction time for the aforementioned thermal decomposition is not particularly limited. As an example, the reaction time for the aforementioned thermal decomposition is preferably 0.001 to 1000 seconds, and more preferably 0.01 to 1000 seconds.

The aforementioned thermal decomposition is carried out in the absence of a catalyst (that is, without using a catalyst). By not using a catalyst in the aforementioned thermal decomposition, costs can be reduced. Here, "in the absence of a catalyst" means that there is no catalyst having an effect of promoting the decomposition reaction present in the thermal decomposition reaction system.

### - Applications -

The diene monomer obtained by the aforementioned method for recovering a diene monomer can be reused as a raw material for diene rubber (polymer). The diene monomer obtained varies depending on the type of diene rubber in the crosslinked rubber to be decomposed, but examples include 1,3-butadiene, isoprene, 1,3-pentadiene, and 2,3-dimethyl-1,3-butadiene, with 1,3-butadiene and isoprene being preferred.

### EXAMPLES

The present disclosure will be described in further detail below with reference to examples, but the present disclosure is not limited in any way to the following examples.

### (1) Method for Analyzing Retention Rate of Monomer Skeleton in Diene rubber

The obtained liquid polymer was analyzed using a nuclear magnetic resonance (NMR) apparatus (product name: "Nuclear Magnetic Resonance Spectrometer JNM-ECA-500" manufactured by JEOL Ltd.), and the retention rate of the isoprene skeleton and/or butadiene skeleton derived from natural rubber and/or butadiene rubber contained in each crosslinked rubber sample was calculated.

### (2) Method for Analyzing Weight-Average Molecular Weight (Mw) of Liquid Polymer

The weight-average molecular weight (Mw) of the liquid polymer in terms of polystyrene was determined by gel permeation chromatography (hereinafter, sometimes referred to as GPC analysis; delivery unit: LC-20AB manufactured by Shimadzu Corporation, column: combination of KF-803 and KF-804 manufactured by Showa Denko K.K. or combination of G2000HXL and G4000HXL manufactured by Tosoh Corporation, detector: differential refractometer RID-10A manufactured by Shimadzu Corporation, analysis system: LabSolutions manufactured by Shimadzu Corporation, eluent: tetrahydrofuran), using monodisperse standard polystyrene as a reference. The measurement temperature was 40°C.

### (Preparation of Crosslinked Rubber Sample A)

A rubber composition was prepared by compounding 50 parts by mass of carbon black, 1.0 part by mass of antioxidant 6PPD [N-phenyl-N'-(1,3-dimethylbutyl)-p-phenylenediamine], 2.0 parts by mass of stearic acid, 2.5 parts by mass of zinc oxide, 1.5 parts by mass of vulcanization accelerator (N-cyclohexyl-2-benzothiazolylsulfenamide), and 4.5 parts by mass of sulfur with 100 parts by mass of natural rubber, and the rubber composition was heat crosslinked to prepare crosslinked rubber. The obtained crosslinked rubber was cut into a shape of 3 mm × 3 mm × 2 mm to produce crosslinked rubber sample A.

### (Preparation of Crosslinked Rubber Sample B)

Except that 60 parts by mass of natural rubber and 40 parts by mass of butadiene rubber [product name "UBEPOL BR150L" manufactured by UBE Elastomer Co., Ltd.] were compounded instead of 100 parts by mass of natural rubber, crosslinked rubber sample B was produced in the same manner as crosslinked rubber sample A.

### (Preparation of Crosslinked Rubber Sample C)

Except that 40 parts by mass of natural rubber and 60 parts by mass of butadiene rubber [product name "UBEPOL BR150L" manufactured by UBE Elastomer Co., Ltd.] were compounded instead of 100 parts by mass of natural rubber, crosslinked rubber sample C was produced in the same manner as crosslinked rubber sample A.

### (Examples 1-1 to 1-7)

0.4 g of crosslinked rubber sample A and 4 mL of toluene were added to a reactor, and the mixture was stirred under an Ar atmosphere at 200°C or 240°C for 3 hours, 6 hours, 9 hours, or 18 hours to carry out the decomposition reaction. After the reaction, the mixture was separated into a solvent (toluene)-soluble component and a solvent-insoluble component. The solvent-soluble component mainly consisted of liquid polymer, while the solvent-insoluble component mainly consisted of carbon black.

¹H-NMR analysis was performed on the obtained solvent-soluble component (liquid polymer), and the retention rate of the diene monomer skeleton was calculated. In addition, the expected yield of diene monomers was calculated as the product of the yield of the liquid polymer and the retention rate of the diene monomer skeleton. Furthermore, the weight-average molecular weight (Mw) of the liquid polymer was analyzed by GPC analysis.

### (Examples 2-1 to 2-7)

Except that crosslinked rubber sample B was used as the decomposition target instead of crosslinked rubber sample A, the decomposition reaction was carried out in the same manner as in Example 1, and the retention rate of the diene monomer skeleton in the product was calculated by ¹H-NMR analysis, and furthermore, the expected yield of diene monomers was calculated. Furthermore, the weight-average molecular weight (Mw) of the liquid polymer was analyzed by GPC analysis.

### (Examples 3-1 to 3-8)

Except that crosslinked rubber sample C was used as the decomposition target instead of crosslinked rubber sample A, the decomposition reaction was performed in the same manner as in Example 1, the retention rate of the diene monomer skeleton in the product was calculated by ¹H-NMR analysis, and furthermore, the expected yield of the diene monomer was calculated. In addition, the weight-average molecular weight (Mw) of the liquid polymer was analyzed by GPC analysis.

### (Examples 4-1 to 4-7)

Except that cyclohexane was used as the solvent instead of toluene, the decomposition reaction was performed in the same manner as in Example 1, the retention rate of the diene monomer skeleton in the product was calculated by ¹H-NMR analysis, and furthermore, the expected yield of the diene monomer was calculated. In addition, the weight-average molecular weight (Mw) of the liquid polymer was analyzed by GPC analysis.

### (Examples 5-1 to 5-7)

Except that xylene was used as the solvent instead of toluene, the decomposition reaction was performed in the same manner as in Example 1, the retention rate of the diene monomer skeleton in the product was calculated by ¹H-NMR analysis, and furthermore, the expected yield of the diene monomer was calculated. In addition, the weight-average molecular weight (Mw) of the liquid polymer was analyzed by GPC analysis.

The results of Examples 1-1 to 5-8 above are resoectively presented in Tables 1 to 5.

**[Table 1**

| | | Example 1-1 | Example 1-2 | Example 1-3 | Example 1-4 | Example 1-5 | Example 1-6 | Example 1-7 |
|---|---|---|---|---|---|---|---|---|
| Decomposition Sample | - | Crosslinked Rubber Sample A (NR = 100 parts by mass) | | | | | | |
| Solvent | - | Toluene | | | | | | |
| Decomposition Temperature | °C | 200 | 200 | 200 | 240 | 240 | 240 | 240 |
| Decomposition Time | Hours | 3 | 9 | 18 | 3 | 6 | 9 | 18 |
| Liquid Polymer Yield | Mass% | 76.7 | 86.5 | 87.1 | 74.8 | 84.2 | 84 | 82.5 |
| Diene Monomer Skeleton Retention Rate | Mass% | 97.8 | 93.9 | 83.9 | 91.9 | 89.7 | 84.7 | 82.9 |
| Estimated Diene Monomer Yield | Mass% | 75 | 81.2 | 73.1 | 68.7 | 75.6 | 71.2 | 68.4 |
| Mw of Liquid Polymer | - | 250608 | 129238 | 54523 | 184522 | 82030 | 66599 | 48196 |

**[Table 2]**

| | | Example 2-1 | Example 2-2 | Example 2-3 | Example 2-4 | Example 2-5 | Example 2-6 | Example 2-7 |
|---|---|---|---|---|---|---|---|---|
| Decomposition Sample | - | Crosslinked Rubber Sample B (NR = 60 parts by mass, BR = 40 parts by mass) | | | | | | |
| Solvent | - | Toluene | | | | | | |
| Decomposition Temperature | °C | 200 | 200 | 200 | 200 | 240 | 240 | 240 |
| Decomposition Time | Hours | 3 | 6 | 9 | 18 | 3 | 9 | 18 |
| Liquid Polymer Yield | Mass% | 51.5 | 59.4 | 64.4 | 68.1 | 44 | 66.3 | 72.2 |
| Diene Monomer Skeleton Retention Rate | Mass% | 82.1 | 84.8 | 84.9 | 83 | 84.7 | 82.7 | 84.2 |
| Estimated Diene Monomer Yield | Mass% | 42.3 | 50.4 | 54.7 | 56.5 | 37.2 | 54.9 | 60.8 |
| Mw of Liquid Polymer | - | 233627 | 223622 | 182114 | 141362 | 197381 | 163485 | 147105 |

**[Table 3]**

| | | Example 3-1 | Example 3-2 | Example 3-3 | Example 3-4 | Example 3-5 | Example 3-6 | Example 3-7 | Example 3-8 |
|---|---|---|---|---|---|---|---|---|---|
| Decomposition Sample | - | Crosslinked Rubber Sample C (NR = 40 parts by mass, BR = 60 parts by mass) | | | | | | | |
| Solvent | - | Toluene | | | | | | | |
| Decomposition Temperature | °C | 200 | 200 | 200 | 200 | 240 | 240 | 240 | 240 |
| Decomposition Time | Hours | 3 | 6 | 9 | 18 | 3 | 6 | 9 | 18 |
| Liquid Polymer Yield | Mass% | 51 | 47.8 | 56.9 | 67.9 | 53.3 | 54.9 | 33.4 | 13.9 |
| Diene Monomer Skeleton Retention Rate | Mass% | 86.4 | 82.8 | 85.4 | 86.1 | 84.4 | 84.8 | 79.2 | 68.5 |
| Estimated Diene Monomer Yield | Mass% | 45.1 | 39.6 | 48.5 | 58.4 | 44.9 | 47.5 | 26.5 | 9.5 |
| Mw of Liquid Polymer | - | 248879 | 219132 | 194150 | 132738 | 271780 | 238136 | 83906 | 16947 |

**[Table 4]**

| | | Example 4-1 | Example 4-2 | Example 4-3 | Example 4-4 | Example 4-5 | Example 4-6 | Example 4-7 |
|---|---|---|---|---|---|---|---|---|
| Decomposition Sample | - | Crosslinked Rubber Sample A (NR = 100 parts by mass) | | | | | | |
| Solvent | - | Cyclohexane | | | | | | |
| Decomposition Temperature | °C | 200 | 200 | 200 | 200 | 240 | 240 | 240 |
| Decomposition Time | Hours | 3 | 6 | 9 | 18 | 3 | 9 | 18 |
| Liquid Polymer Yield | Mass% | 36 | 43.9 | 55.1 | 73.7 | 75.9 | 66.8 | 60.8 |
| Diene Monomer Skeleton Retention Rate | Mass% | 76 | 87.2 | 85 | 79.9 | 81.7 | 85.4 | 70.9 |
| Estimated Diene Monomer Yield | Mass% | 27.4 | 38.3 | 46.8 | 58.9 | 62 | 57.1 | 43.1 |
| Mw of Liquid Polymer | - | 211499 | 212488 | 157288 | 106383 | 125150 | 109061 | 105937 |

**[Table 5]**

| | | Example 5-1 | Example 5-2 | Example 5-3 | Example 5-4 | Example 5-5 | Example 5-6 | Example 5-7 |
|---|---|---|---|---|---|---|---|---|
| Decomposition Sample | - | Crosslinked Rubber Sample A (NR = 100 parts by mass) | | | | | | |
| Solvent | - | Xylene | | | | | | |
| Decomposition Temperature | °C | 200 | 200 | 200 | 200 | 240 | 240 | 240 |
| Decomposition Time | Hours | 3 | 6 | 9 | 18 | 6 | 9 | 18 |
| Liquid Polymer Yield | Mass% | 67 | 84.6 | 80.6 | 78.1 | 77.3 | 71.7 | 59.4 |
| Diene Monomer Skeleton Retention Rate | Mass% | 80.8 | 82 | 77.4 | 70.2 | 67.6 | 63.6 | 80 |
| Estimated Diene Monomer Yield | Mass% | 54.1 | 69.4 | 62.4 | 64.8 | 62.3 | 58.7 | 47.6 |
| Mw of Liquid Polymer | - | 210329 | 125356 | 167093 | 98944 | 70853 | 60111 | 78052 |

### <Recovery of Diene Monomer>

### (Example 6)

A portion (3.0 mg) of a reaction mixture (reaction mixture obtained by concentrating under reduced pressure the filtrate obtained by filtering the reaction solution of Example 1-1 (first decomposition step)) is dissolved in 0.60 mL of tetrahydrofuran. A portion (5.0 µL) of this solution is placed in a stainless steel vessel, and the solvent is distilled off under reduced pressure. The reaction mixture (0.025 mg) of the first decomposition step obtained after solvent removal is heated to 700°C using a pyrolyzer (PY-3030D, Frontier Laboratories Ltd.), and the resulting pyrolysis products are analyzed using a gas chromatograph-mass spectrometer and a gas chromatograph analyzer (GCMS-QP2010Plus and GC-2014, both manufactured by Shimadzu Corporation, both equipped with a capillary column UltraALLOY UA-1 manufactured by Frontier Laboratories Ltd.). The yields were estimated to be 34.8% for isoprene, 1.3% for limonene, 17.3% for hydrocarbons with 1 to 4 carbon atoms, and 38.8% for hydrocarbons with 5 to 10 carbon atoms (excluding isoprene and limonene).

### (Examples 7 to 10)

Except that the decomposition target and heating temperature are changed as indicated in Table 6, the pyrolysis reaction was performed in the same manner as in Example 6, the resulting pyrolysis products are analyzed using a gas chromatograph-mass spectrometer and a gas chromatograph analyzer, and the results were estimated.

**[Table 6]**

| | | Example 6 | Example 7 | Example 8 | Example 9 | Example 10 |
|---|---|---|---|---|---|---|
| Decomposition Sample | - | Decomposition Product of Example 1-1 | Decomposition Product of Example 1-3 | Decomposition Product of Example 1-5 | Decomposition Product of Example 1-6 | Decomposition Product of Example 1-7 |
| Heating Temperature | °C | 700 | 700 | 700 | 700 | 700 |
| soprene Yield | Mass% | 34.8 | 37.3 | 32.2 | 35 | 33.3 |
| utadiene Yield | Mass% | 0 | 0 | 0 | 0 | 0 |
| imonene Yield | Mass% | 1.3 | 1.4 | 1.2 | 1.3 | 1.3 |
| 1-C4 Yield *1 | Mass% | 17.3 | 18.7 | 16.1 | 17.5 | 16.6 |
| 5-C10 Yield *2 | Mass% | 38.8 | 41.6 | 36 | 39.1 | 37.1 |

| | | | | | | |
|---|---|---|---|---|---|---|
| *1 Yield of hydrocarbons with 1 to 4 carbon atoms (excluding butadiene) *2 Yield of hydrocarbons with 5 to 10 carbon atoms (excluding isoprene and limonene) | | | | | | |

From Table 6, it is predicted that a diene monomer can be obtained at a high yield from the liquid polymer of the present disclosure.

### INDUSTRIAL APPLICABILITY

The liquid polymer of the present disclosure can be used as a raw material for a diene monomer, and furthermore, the diene monomer can be used as a raw material for a rubber component of rubber products such as tires, rubber crawlers, and seismic isolation rubber.

## Claims

1. A liquid polymer obtained by decomposition of crosslinked rubber containing diene rubber, wherein
the liquid polymer has a weight-average molecular weight of 500 to 300,000, and
relative to mass of a diene monomer skeleton of the diene rubber in the crosslinked rubber before the decomposition, the liquid polymer has a retention rate of the diene monomer skeleton of 30 mass% or more.

2. The liquid polymer according to claim 1, wherein the diene monomer skeleton of the diene rubber is at least one selected from the group consisting of an isoprene skeleton and a butadiene skeleton.

3. The liquid polymer according to claim 1, wherein
the crosslinked rubber contains diene rubber including an isoprene skeleton, and
relative to mass of the isoprene skeleton of the diene rubber in the crosslinked rubber before the decomposition, the liquid polymer has a retention rate of the isoprene skeleton of 30 mass% or more.

4. The liquid polymer according to claim 1, wherein
the crosslinked rubber contains diene rubber including a butadiene skeleton, and
relative to mass of the butadiene skeleton of the diene rubber in the crosslinked rubber before the decomposition, the liquid polymer has a retention rate of the butadiene skeleton of 30 mass% or more.

5. The liquid polymer according to claim 1, wherein relative to mass of a diene monomer skeleton of the diene rubber in the crosslinked rubber before the decomposition, the liquid polymer has a retention rate of the diene monomer skeleton of 50 mass% or more.

6. The liquid polymer according to claim 1, wherein relative to mass of a diene monomer skeleton of the diene rubber in the crosslinked rubber before the decomposition, the liquid polymer has a retention rate of the diene monomer skeleton of 70 mass% or more.

7. The liquid polymer according to claim 1, wherein the crosslinked rubber is sulfur crosslinked rubber.

8. A mixture of a liquid polymer and recovered carbon black obtained by decomposition of crosslinked rubber containing diene rubber and carbon black, wherein the liquid polymer is the liquid polymer according to any one of claims 1 to 7.

9. A mixture of a liquid polymer and recovered carbon black obtained by decomposition of crosslinked rubber containing diene rubber and carbon black, wherein the liquid polymer is obtained by removing some or all of components having a molecular weight of 5,000 or less in the liquid polymer according to any one of claims 1 to 7, and has a proportion of components having a molecular weight of 15,000 or less of 30 mass% or less.

10. A method for recovering a diene monomer comprising thermally decomposing the liquid polymer according to any one of claims 1 to 7 at 300°C to 950°C under an inert gas atmosphere and in the presence of a catalyst.

11. A method for recovering a diene monomer comprising thermally decomposing the liquid polymer according to any one of claims 1 to 7 at 300°C to 450°C under an inert gas atmosphere and in the absence of a catalyst.

12. A method for recovering a diene monomer comprising thermally decomposing the liquid polymer according to any one of claims 1 to 7 at 600°C to 950°C under an inert gas atmosphere and in the absence of a catalyst.
